(19) Europäisches Patentamt
European Patent Office
Office européen des brevets

(11) **EP 0 799 153 B1**

(12) **EUROPÄISCHE PATENTSCHRIFT**

(45) Veröffentlichungstag und Bekanntmachung des Hinweises auf die Patenterteilung:
**06.05.1998 Patentblatt 1998/19**

(21) Anmeldenummer: **95942022.5**

(22) Anmeldetag: **19.12.1995**

(51) Int. Cl.$^6$: **B65G 47/26**, B65G 47/08, B65G 25/06, B65G 35/08

(86) Internationale Anmeldenummer:
**PCT/DE95/01820**

(87) Internationale Veröffentlichungsnummer:
**WO 96/19403 (27.06.1996 Gazette 1996/29)**

(54) **EINRICHTUNG ZUR BEREITSTELLUNG VON BEHÄLTERN IN EINER REIHE**

DEVICE FOR PREPARING CONTAINERS IN A ROW

DISPOSITIF POUR LA MISE EN PLACE DE RECEPTACLES DANS UNE RANGEE

(84) Benannte Vertragsstaaten:
**AT BE CH DE DK ES FR GB LI NL**

(30) Priorität: **21.12.1994 DE 4445799**

(43) Veröffentlichungstag der Anmeldung:
**08.10.1997 Patentblatt 1997/41**

(73) Patentinhaber:
**SIEMENS AKTIENGESELLSCHAFT**
**80333 München (DE)**

(72) Erfinder: **SCHUSTER, Rudolf**
**D-85551 Kirchheim (DE)**

(56) Entgegenhaltungen:
GB-A- 633 649    GB-A- 2 076 512
US-A- 4 425 074

**Beschreibung**

Die auf Postsendungen wie Briefen, Postkarten, Päckchen und dergleichen als Kennzahl für einen Ort, einen Zustellbereich, ein Postfach oder einen Großempfänger anzugebenden, maschinenlesbaren Postleitzahlen ermöglichen eine rasche maschinelle Verteilung der Post. Das Sortieren der ankommenden Postsendungen erfolgt beispielsweise mit Hilfe von steuerbaren Stückgutträgern, die in speziellen Beladeplätzen mit jeweils einer Postsendung beladen werden und diese Postsendung dann an einen der jeweiligen Postleitzahl zugeordneten Sortierbehälter abgeben. Da die Sortierbehälter in verschiedenen Ebenen angeordnet sein können, müssen die an Fördereinrichtungen umlaufenden Stückgutträger gegebenenfalls auch verschiedene Höhenlagen überbrücken können. Nach der Übergabe der Postsendung an den zugeordneten Sortierbehälter können die leeren Stückgutträger beim Passieren eines Beladeplatzes erneut mit einer Postsendung beladen werden. Das Beladen der Stückgutträger erfolgt beispielsweise mit Hilfe eines umlaufenden Flügelrades, dessen Flügel Zellen bilden, die das bereits vereinzelte und auf einer Fördereinrichtung ankommende Postgut aufnehmen und an die umlaufenden Stückgutträger abgeben. Die Vereinzelung und die Übergabe des Postguts an die zu dem Flügelrad führende Fördereinrichtung kann mit Hilfe eines Rotors vorgenommen werden, dessen radial verstellbar und verschwenkbar angeordnete Sauggreifer das in der Abholposition eines Magazins bereitgestellte Postgut ergreifen und nach einer Drehung des Rotors an die Fördereinrichtung übergeben.

Bei dem vorstehend beschriebenen Sortiersystem werden volle Sortierbehälter manuell entnommen und durch einen leeren Sortierbehälter ersetzt. Damit dieser Austausch möglichst rasch vorgenommen werden kann, werden unterhalb der Sortierbehälter des Sortiersystems die leeren Sortierbehälter in einer Reihe bereitgestellt. Die Entnahme eines leeren Sortierbehälters kann dann jeweils ohne zusätzliche Wege auf der Höhe eines auszutauschenden vollen Sortierbehälters vorgenommen werden.

Es ist grundsätzlich aus GB-A-633 649 eine Einrichtung bekannt mit einer aus ineinander mit Spiel verhakten gleichgroßen Abschnitten bestehenden Auflage für Gegenstände, deren Abschnitte zueinander auf einer Führung in Richtung des Spiels verschiebbar sind. Die Abschnitte haben im wesentlichen die Abmessung der untereinander gleich breiten Gegenstände, so daß diese sich im zusammgengeschobenen Zustand fast berühren und zwischen ihnen im auseiandergezogenen Zustand der Auflage Abstände von der Größe des Spiels bestehen.

Der in Anspruch 1 angegebenen Erfindung liegt das Problem zugrunde, eine Einrichtung zur Bereitstellung von Behältern in einer Reihe zu schaffen, die eine automatische Zufuhr der Behälter und eine unbehinderte manuelle Entnahme der Behälter an beliebiger Stelle der Reihe ermöglicht.

Eine erfindungsgemäße Einrichtung kann in öffentlichen Postämtern oder in den Hauspostzentralen großer Firmen für die Bereitstellung von leeren Behältern bei Sortiersystemen eingesetzt werden. Darüber hinaus kann eine erfindungsgemäße Einrichtung aber auch in Lagersystemen oder Kommissionieranlagen für vergleichbare Aufgaben eingesetzt werden, bei welchen leere oder auch volle Behälter in einer Reihe bereitgestellt und manuell aus dieser Reihe entnommen werden.

Die mit der Erfindung erzielten Vorteile bestehen insbesondere darin, daß die teleskopartig ineinanderschiebbaren Auflage-Segmente einerseits eine automatische Zufuhr von Behältern und andererseits die Bildung von Lücken zwischen den bereitgestellten Behältern ermöglichen. Durch die Bildung von Lücken zwischen einzelnen der in einer Reihe bereitgestellten Behälter, wird die Entnahme von einzelnen Behältern aus der Reihe ohne Reibungswiderstand zu den Nachbarbehältern erheblich erleichtert.

Vorteilhafte Ausgestaltungen der Erfindung sind in den Unteransprüchen angegeben.

Die Ausgestaltung nach Anspruch 2 ermöglicht die Bildung von Lücken zu beiden Seiten jedes einzelnen Behälters einer Reihe, wodurch das Herausziehen einzelner Behälter aus dieser Reihe weiter begünstigt wird.

Die Weiterbildung nach Anspruch 3 ermöglicht eine besonders einfache und wirtschaftliche Herstellung der teleskopartig ineinanderschiebbaren Auflage-Segmente. Greifen dabei die Enden der Abflachungen einzelner einander zugeordneter Auflage-Segmente gemäß Anspruch 4 hakenförmig ineinander, so ergeben sich hierdurch auf einfache Weise Anschläge für das Auseinanderziehen der Auflage-Segmente.

Ein Ausführungsbeispiel der Erfindung ist in der Zeichnung dargestellt und wird im folgenden näher beschrieben.

Es zeigen

Figur 1    eine Einrichtung zur Bereitstellung von Behältern in einer Reihe mit Lücken zwischen den einzelnen bereitgestellten Behältern,

Figur 2    die in Figur 1 dargestellte Einrichtung nach der Zufuhr eines weiteren Behälters,

Figur 3    die in Figur 2 dargestellte Einrichtung nach der Entnahme eines Behälters aus der Reihe und

Figur 4    die in Figur 3 dargestellte Einrichtung nach dem Schließen sämtlicher Lücken und der Aufnahme des weiteren Behälters auf einem Auflage-Segment.

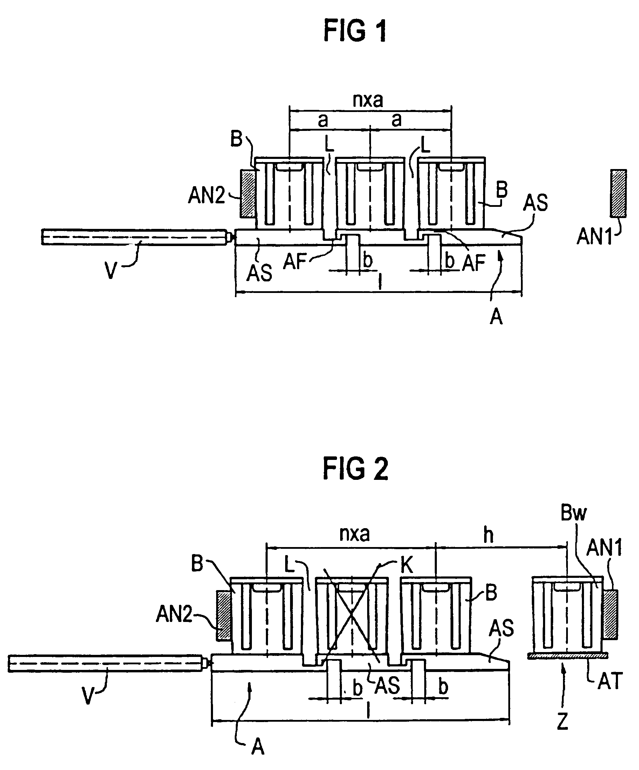

Figur 1 zeigt in stark vereinfachter schematischer Darstellung eine Einrichtung zur Bereitstellung von Behältern B, die in einer Reihe auf einer insgesamt mit A bezeichneten Auflage stehen. Die Auflage A ist ihrerseits aus einzelnen Auflage-Segmenten AS zusammengesetzt, die an den Stoßstellen teleskopartig ineinandergeschoben werden können. Hierzu sind die Auflage-Segmente AS im Bereich der Stoßstellen abwechselnd oben und unten abgeflacht, wobei die Enden der entsprechenden Flachungen AF einander zugeordneter Auflage-Segmente AS hakenförmig ineinandergreifen. Im dargestellten Zustand sind die Auflage-Segmente AS mit Hilfe einer am ersten Auflage-Segment AS angreifenden und in horizontaler Richtung verstellbaren Verschiebeeinrichtung V auseinandergezogen, wobei die durch die hakenförmigen Enden der Abflachungen AF begrenzten Verschiebewege jeweils mit b bezeichnet sind. Es ist zu erkennen, daß jedem auf der Auflage A bereitgestellten Behälter B jeweils ein Auflage-Segment AS zugeordnet ist und daß durch das Auseinanderziehen der Auflage-Segmente AS zwischen benachbarten Behältern B der Reihe jeweils eine dem Verschiebeweg b entsprechende Lücke L gebildet ist. Durch diese Lücken L kann jeder einzelne Behälter B in der senkrecht zur Zeichnungsebene verlaufenden Richtung ohne Reibungswiderstand zu den Nachbarbehältern aus der Reihe herausgezogen werden.

Obwohl in Figur 1 nur drei Behälter B dargestellt sind, soll die gesamte Reihe eine Anzahl von n Behältern B umfassen. Bei einem Mittenabstand der benachbarten Behälter B einschließlich der Lücke L ergibt sich ein Mittenabstand zwischen dem ersten und dem letzten Behälter B der Reihe von n x a. Die Erstreckung der Auflage A vom Anfang des ersten Auflage-Segments AS bis zum Ende des letzten Auflage-Segments AS ist im auseinandergezogenen Zustand sämtlicher Auflage-Segmente AS mit l bezeichnet. Figur 1 zeigt auch noch einen ersten Anschlag AN1 der in einem gewissen Abstand zum letzten Auflage-Segment AS angeordnet ist und einen zweiten Anschlag AN2, an welchem der erste Behälter B der Reihe anliegt.

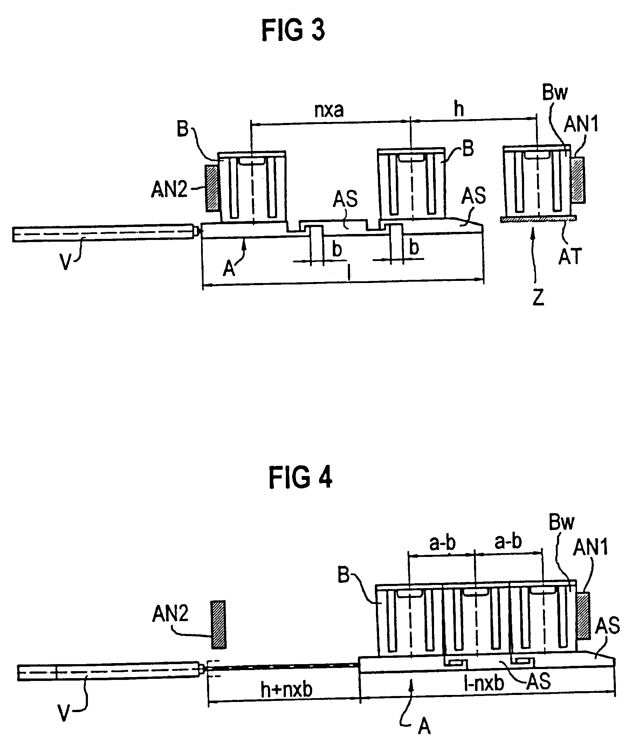

Figur 2 zeigt den in Figur 1 dargestellten Zustand mit einem weiteren Behälter Bw, der an einer mit Z bezeichneten Zuführstelle am Ende der Reihe in einer senkrecht zur Zeichnungsebene verlaufenden Richtung zugeführt wurde und der am ersten Anschlag AN1 anliegt. Der Mittenabstand zwischen dem letzten Behälter B der Reihe und dem weiteren Behälter Bw ist mit h bezeichnet. Der weitere Behälter Bw steht im Bereich der Zuführstelle Z beispielsweise auf zwei Auflage-Teilen AT, die in der zur Zeichnungsebene senkrecht verlaufenden Richtung vor und hinter dem letzten Auflage-Segment AS der Auflage A angeordnet sind und somit dieses letzte Auflage-Segment AS zwischen sich aufnehmen können. In Figur 2 ist schließlich auch noch durch ein Kreuz K die beabsichtigte Entnahme eines Behälters B im mittleren Bereich der Reihe angedeutet. Figur 3 zeigt den Zustand nach der Entnahme des in Figur 2 durch das Kreuz K gekennzeichneten Behälters B.

Figur 4 zeigt den Zustand nach einer Betätigung der Verschiebeeinrichtung V, die die gesamte Auflage A zum ersten Anschlag AN1 hin verschiebt, wobei der Hub insgesamt h + n x b beträgt. Es ist zu erkennen, daß durch diese Betätigung der Verschiebeeinrichtung V sämtliche Auflage-Segmente AS ineinandergeschoben werden und außerdem das letzte Auflage-Segment AS unter den weiteren Behälter Bw geschoben wurde. Die Mittenabstände der einzelnen Behälter B betragen in diesem Zustand a - b, während die Erstreckung der durch n Auflage-Segmente AS gebildeten Auflage A jetzt l - n x b beträgt.

Nach dem in Figur 4 dargestellten Verschiebevorgang wird die Verschiebeeinrichtung V erneut betätigt, wobei die gesamte Auflage A um den Hub h + n x b wieder zurückgezogen wird. Dabei ergibt sich wieder der in Figur 1 dargestellte Zustand mit den Lücken L zwischen benachbarten Behältern B der Reihe.

Bei der anhand der Figuren 1 bis 4 schematisch dargestellten Einrichtung handelt es sich um eine Einrichtung zur Bereitstellung von leeren Sortierbehältern. Diese Einrichtung wird beispielsweise bei einer in der älteren Patentanmeldung P 44 22 067.7 beschriebenen Sortiereinrichtung für Postgut benötigt, um dort die mit Postgut gefüllten Sortierbehälter rasch gegen leere Behälter austauschen zu können. Die Verschiebeeinrichtung V kann beispielsweise als pneumatischer Zylinder ausgebildet sein. Die einzelnen Auflage-Segmente AS der Auflage A sind auf einer beispielsweise mit PTFE beschichteten Lagerplatte verschiebbar angeordnet.

**Patentansprüche**

1. Einrichtung zur Bereitstellung von Behältern (B) in einer Reihe, insbesondere von Sortierbehältern für Postgut, mit

   - einer in Reihenlängsrichtung verschiebbar angeordneten Auflage (A), die aus an den Stoßstellen teleskopartig ineinanderschiebbaren Auflage-Segmenten (AS) zusammengesetzt ist,
   - einer an einem Ende der Reihe angeordneten Zuführstelle (Z) für weitere Behälter (Bw),
   - einem in Längsrichtung hinter der Zufuhrstelle (Z) angeordneten Anschlag (AN1) für die weiteren Behälter (Bw) und mit
   - einer an dem der Zuführstelle (Z) gegenüberliegenden Ende der Reihe am letzten Auflage-Segment (AS) angreifenden Verschiebeeinrichtung (V),
     wobei
   - die Verschiebeeinrichtung (V) die Auflage (A) in einer Richtung unter den an der Zuführstelle (Z) am Anschlag (AN1) anliegenden weiteren Behälter (Bw) schiebt und in der anderen Richtung beim Zurückziehen der Auflage (A) die ineinandergeschobenen Auflage-Segmente (AS) zur Bildung von Lücken (L) zwischen den bereitgestellten Behältern (B) auseinanderzieht und

- wobei der Mittenabstand (a-b) zwischen den zusammengeschobenen Auflagesegmenten (AS) zumindest annähernd gleich der Breite der Behälter in deren Reihenrichtung ist.

2. Einrichtung nach Anspruch 1,
   **dadurch gekennzeichnet,**
   daß jedem auf der Auflage (A) bereitgestellten Behälter (B) jeweils ein Auflage-Segment (AS) zugeordnet ist.

3. Einrichtung nach Anspruch 1 oder 2,
   **dadurch gekennzeichnet,**
   daß die Auflage-Segmente (AS) im Bereich der Stoßstellen abwechselnd oben und unten abgeflacht sind.

4. Einrichtung nach Anspruch 3,
   **dadurch gekennzeichnet,**
   daß die Enden der Abflachungen (AF) einander zugeordneter Auflage-Segmente (AS) hakenförmig ineinandergreifen.

**Claims**

1. Device for providing containers (B) in a row, in particular sorting containers for postal items, having

   - a support (A) which is arranged displaceably in the longitudinal direction of the row and is assembled from support segments (AS) which can be pushed into one another telescopically at the joints,
   - a feed point (Z) for further containers (Bw) which is arranged at one end of the row,
   - a stop (AN1), arranged behind the feed point (Z) in the longitudinal direction, for the further containers (Bw), and having
   - a displacing device (V) acting on the last support segment (AS) at the end of the row opposite the feed point (Z),
     it being the case that
   - the displacing device (V) pushes the support (A) in one direction under the further container (Bw) bearing against the stop (AN1) at the feed point (Z) and, during the retraction of the support (A), in the other direction draws apart the support segments (AS) pushed into one another to form gaps (L) between the provided containers (B), and
   - the centre-to-centre spacing (a-b) between the pushed-together support segments (AS) is at least approximately equal to the width of the containers in the direction of their row.

2. Device according to Claim 1, characterized in that each container (B) provided on the support (A) is respectively assigned a support segment (AS).

3. Device according to Claim 1 or 2, characterized in that in the region of the joints the support segments (AS) are alternately flattened at the top and at the bottom.

4. Device according to Claim 3, characterized in that the ends of the flats (AF) of mutually assigned support segments (AS) interengage in a hooked fashion.

**Revendications**

1. Dispositif pour disposer des réceptacles (B) dans une rangée, notamment des réceptacles de tri pour des colis postaux, comportant

   - un support (A) qui est monté coulissant dans la direction longitudinale de la rangée et qui est composé de segments (AS) de support pouvant être enfilés de manière télescopique aux points de contact,
   - un point (Z) d'alimentation en réceptacle (Bw) supplémentaire, qui est disposé à une extrémité de la rangée,
   - une butée (AN1) pour les réceptacles (Bw) supplémentaires, qui est montée en aval du point (Z) d'alimentation dans la direction longitudinale, et
   - un dispositif (V) de déplacement attaquant le dernier segment (AS) de support à l'extrémité de la rangée opposée au point (Z) d'alimentation,
   - le dispositif (V) de déplacement déplaçant le support (A) en direction du point situé au-dessous du réceptacle (Bw) supplémentaire, qui est en contact avec la butée (AN1) au point (Z) d'alimentation et, écartant dans l'autre direction lorsque le support (A) est rétracté, les segments (AS) de support enfilés les uns dans les autres, afin de former des vides (L) entre les réceptacles (B) mis en place, et
   - la distance (a-b) moyenne entre les segments (AS) de support repoussés les uns sur les autres étant égale au moins à peu près à la largeur des réceptacles dans la direction de leur rangée.

2. Dispositif suivant la revendication 1, caractérisé en ce qu'il est associé un segment (AS) de support à chaque réceptacle (B) disposé sur le support (A).

3. Dispositif suivant la revendication 1 ou 2, caractérisé en ce que les segments (AS) de support sont aplatis alternativement en haut et en bas dans la zone des points de contact.

4. Dispositif suivant la revendication 3, caractérisé en ce que les extrémités des parties (AF) aplaties de segments (AS) de support associés les uns aux autres rentrent les unes dans les autres en forme de crochet.

# FIG 1

# FIG 2

# FIG 3

# FIG 4